# EUROPEAN PATENT SPECIFICATION

(11) **EP 0 390 263 B1**
(45) Date of publication and mention of the grant of the patent: **20.09.1995**
(21) Application number: 90200680.8
(22) Date of filing: 22.03.1990
(51) Int. Cl.: G11B 11/10

(54) **Device for inscribing and/or reading a magneto-optical information carrier**
Einrichtung zum Einschreiben und/oder Auslesen eines magnetooptischen Informationsträgers
Dispositif d'enregistrement et/ou de lecture d'un support d'information magnéto-optique

(30) Priority: 28.03.1989 NL 8900751
(43) Date of publication of application: 03.10.1990
(73) Proprietor: Philips Electronics N.V., 5621 BA Eindhoven (NL)
(72) Inventor: Hensing, Johannes Martinus Maria, NL-5656 AA Eindhoven (NL); Hezemans, Cornelius Antonius, NL-5656 AA Eindhoven (NL)
(74) Representative: Schrijnemaekers, Hubert Joannes Maria

(56) References cited:
- JP-A-64 066 848
- PATENT ABSTRACTS OF JAPAN vol. 12, no. 468 (P-797)(3315) 08 December 1988,& JP-A-63 187443 (TOSHIBA CORP.) 03 August 1988,
- PATENT ABSTRACTS OF JAPAN vol. 13, no. 82 (P-833)(3430) 23 February 1989,
- PATENT ABSTRACTS OF JAPAN vol. 10, no. 327 (P-513)(2383) 07 November 1986,& JP-A-61 133069 (OLYMPUS OPTICAL CO. LTD.) 20 June 1986,
- PATENT ABSTRACTS OF JAPAN vol. 11, no. 109 (P-564)(2556) 07 April 1987,& JP-A-61 258354 (MATSUSHITA ELECTRIC IND. CO. LTD.) 15 November 1986,
- PATENT ABSTRACTS OF JAPAN vol. 12, no. 497 (P-806)(3344) 26 December 1988,& JP-A-63 206936 (SONY CORPORATION) 26 August 1988,
- PATENT ABSTRACTS OF JAPAN vol. 13, no. 345 (P-909)(3693) 03 August 1989,& JP-A-01 102760 (NEC HOME ELECTRONICS LTD.) 20 April 1989,

## Description

The invention relates to a device for inscribing and/or reading a magneto-optical information carrier as defined in the preamble of claim 1.

Such a device is known from German Offenlegungsschrift DE 37 23 134. The prior-art device for magneto-optically inscribing a magneto-optical disc comprises a housing having a cover which can be opened and closed to insert or remove a magneto-optical disc. During operation the magneto-optical disc loaded into the housing is held on a turntable by a disc-pressure member and is rotated by a drive motor. The drive motor is secured to a frame accommodated in the housing. The housing further accommodates a slide which is movable over rectilinear guide means of the frame in a radial direction relative to the axis of rotation of the turntable. The slide is constructed as a tilted U-shaped part having two mutually parallel radial limbs. One of the limbs carries an objective for concentrating a radiation beam to form a radiation spot and the other limb carries a permanent magnet for producing a magnetic bias field. The objective and the magnet are arranged opposite one another and are each situated at one side of the magneto-optical disc which is supported by the turntable.

The information carrier to be used for magneto-optical recording is provided with a thin film of a ferromagnetic or a ferrimagnetic material having a direction of easy magnetisation perpendicular to the surface of the thin film. During recording it is necessary that the thin film is heated to a temperature above the Curie temperature, or in the case of ferrimagnetic materials to a temperature above the so-called compensation point. Recording can be effected in accordance with two methods. In accordance with a first method, for which the known device can be used, a constant magnetic bias field is applied by means of a permanent magnet and the thin film is heated by means of a pulsating laser beam. In accordance with a second method the thin film is locally heated by means of a continuous-wave or pulsed laser beam and a pulsating magnetic field is applied at the location of the thin film heated by the laser beam. The pulsating magnetic field is generated by means of an energised coil. The information recorded by means of either method is read optically, utilising the Kerr effect.

The known device cannot readily be adapted to said second method of magneto-optical recording. In principle, it is conceivable to replace the permanent magnet by a coil, but if it is required to record a large amount of information per unit of time the magnetic flux in the coil has to be minimised. A consequence of this is that the magnetic field which is produced is comparatively small so that the coil should be arranged at a very short distance from the information carrier, which is possible only if the coil is incorporated in an actuator for moving the coil in a direction parallel to the axis of rotation of the turntable. It is found that the U-shaped construction of the slide in the known device causes undesirable dynamic problems during energisation of the said actuator. The comparatively compliant construction of the known slide can be stiffened by using a heavier construction for the slide but this has the drawback that the mass of the slide becomes impermissibly large, which is incompatible with fast access times.

Another disadvantage of the device known from said Offenlegungsschrift is that the rectilinear guide means must be comparatively long and, consequently, the housing must be comparatively deep in order to enable the information carrier to be placed on and removed from the turntable.

It is an object of the invention to provide a compact device of the type defined in the opening paragraph which, regardless of the method of magneto-optically inscribing an information carrier, does not cause any dynamic problems and access-times problems.

To this end the device in accordance with the invention is characterized as defined in the characterizing portion of claim 1. An advantage of the device in accordance with the invention is that both slides can be of a light-weight construction, so that short access times are attainable, although the sub-frame can be of construction which is adequately stiff to preclude dynamic problems. Another major advantage is that the length of the rectilinear guide means for the slides can be reduced without making it more difficult to place the information carrier, which may be accommodated in a cassette, on or remove it from the turntable. The coupling means structurally and effectively ensure that the magnetic field produced by the magnetic unit extends at the location of the radiation spot formed in the focusing plane by the objective, which plane coincides with the information plane of the information carrier.

An embodiment of the device in accordance with the invention is characterized in that the sub-frame is secured to the frame so as to be pivotable about a pivotal axis. This is a simple to realise embodiment.

An embodiment is characterized in that the coupling means comprise a hinge construction secured to both slides. In this way the slides are interconnected without lost motion, the hinge construction obviously interconnecting the slides rigidly in a radially direction and, in the case of a pivotable frame, the slides being coupled to one another so as to be movable in the pivoting direction.

An embodiment is characterized in that the coupling means comprise a transmission mechanism cooperating with the slide-drive unit. The transmission mechanism may comprise gear wheels and/or belts. This embodiment does not require any constructional provisions to couple the slides to one another. This has the advantage that the slide carrying the optical unit does not require any further adaptation for use in both a magneto-optical player and in an optical player not comprising a magnetic unit, for example a CD player, which is beneficial for a modular construction of the players and hence an enlarged production series, which may reduce the cost price.

An embodiment, in which the device comprises a pressure member for pressing the information carrier onto the turntable during operation, is characterized in that the pressure member is secured to the sub-frame. This embodiment has the advantage that no additional supporting element for the pressure member is needed. Another important advantage of this embodiment is that at the location of the pressure member a supporting point for the sub-frame is obtained, which constributes significantly to the stiffness of the sub-frame during operation.

It is to be noted that JP-A 1-166848 discloses a magneto-optical device comprising a slide carrying an optical head and a slide carrying a magnetic head. The device also comprises two fixed mutually parallel pairs of parallel guideways for guiding said slides, and one drive motor for driving said slides via a transmission mechanism.

It is to be noted also that the composition and the characteristics of a magneto-optical information carrier are described in Applied Optics, Vol. 23, no. 22, 15 November 1985, pp. 3972-3978; Digital Magneto-optic disc drive, T. Deguchi c.s..

The invention will now be described in more detail, by way of example, with reference to the accompanying drawings in which:
Fig. 1 is a diagrammatic side view of a first embodiment of the device in accordance with the invention,
Fig. 2 is a plan view of the embodiment shown in Fig. 1,
Fig. 3 is a sectional view taken on the line III-III in Fig. 1,
Fig. 4 is a diagrammatic side view showing a part of a second embodiment of the device in accordance with the invention,
Fig. 4A is a side view showing a part of the second embodiment,
Fig. 4B is a plan view of the part shown in Fig. 4A,
Fig. 5 is a diagrammatic side view showing a part of a third embodiment of the device in accordance with the invention,
Fig. 6 is a diagrammatic side view of a fourth embodiment of the device in accordance with the invention, and
Fig. 7 is a plan view of the embodiment shown in Fig. 6.

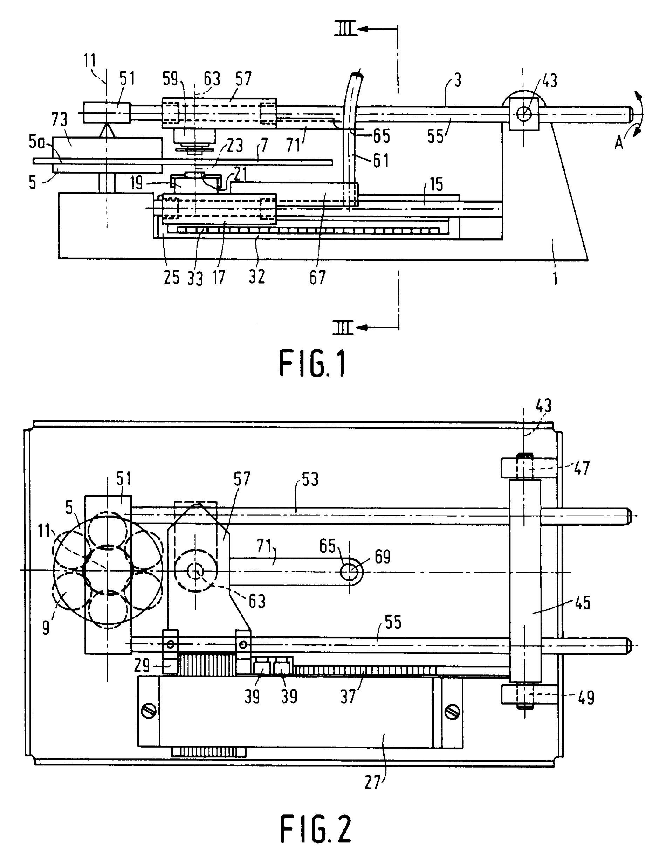

The device in accordance with the invention shown in Figs. 1, 2 and 3 comprises a frame 1 and a pivotable sub-frame 3. A turntable 5 for supporting and centring a disc-shaped magneto-optical information carrier 7 is arranged in the frame 1. For this purpose the turntable 5 comprises a supporting surface 5a and a centring cone, not shown. An electric motor 9 secured in the frame 1 serves to rotate the turntable 5 about an axis of rotation 11, a speed of for example 2400 revolutions per minute being attainable. Two guide spindles 13 and 15 are arranged on the frame 1 to form rectilinear guide means for a slide 17. The guide spindles 13 and 15 extend parallel to one another and are oriented in such a way that the slide 17 can perform a radial movement relative to the axis of rotation 11 between a position near the turntable and a position remoter from the turntable. The slide 17 carries an optical unit 19, comprising an optical lens or objective 21 having an optical axis 23 and an electromagnetic actuator for driving the objective 21. The electromagnetic actuator may be of a type as is disclosed in European Patent Application 0,268,311 (PHN 11.896). The objective 21 serves for focusing a radiation beam from a radiation source, not shown, for example a laser, to form a radiation spot in the information plane of the information carrier 7. The radiation source may be situated on the slide 17 or elsewhere, for example on the frame 1. During operation the slide 17 is driven by a linear motor 25, comprising a stator 27 and a movable armature 29. The stator 27 comprises central stator plates 31 and end plates 32 with magnets 33 and is secured to the frame 1. The armature 29 comprises armature coils 35 and is secured to the slide 17. The linear motor 25 may be constructed as a stepping motor. If the motor is not constructed as a stepping motor, as in the present embodiment, the device may comprise an optical ruler 37 secured to the stator 27 and a set of optical emitters and receivers 39 cooperating with said rulers and secured to the armature 29 to detect the position of the slide 17.

The sub-frame 3 is pivotable about a pivotal axis 43 defined by a shaft 45 having two journals 47 and 49 which are supported in the frame 1. The shaft 45 is secured to the sub-frame 3, which comprises two guide spindles 53 and 55 which extend parallel to one another and which are secured to a connecting member 51 of the sub-frame 3. The guide spindles 53 and 55, which extend parallel to the guide spindles 13 and 15 of the frame 1 in the position shown, which corresponds to the operating position, provide the rectilinear guidance for a slide 57. The slide 57 carries a magnetic unit 59, comprising means for generating a magnetic field which extends into the information plane of the information carrier 7. Such means may comprise a permanent magnet or an induction coil. The magnetic unit may further comprise an electro-magnetic actuator for moving said means in a direction perpendicular to the information carrier 7. The magnetic unit 59, to which a magnetic axis 63 can be assigned, is situated opposite to and is spaced from the optical unit 19. The information carrier 7 is situated between the optical unit 19 and the magnetic unit 59, and at least during operation it is important that the optical axis 23 and the magnetic axis 63 are disposed in line with one another. In order to achieve this, the device comprises coupling means for coupling the slides 17 and 57 to one another. In the present embodiment the coupling means comprise a banana-shaped member 61 secured to the slide 17 and a stop 65 arranged on the slide 57 to cooperate with said member. The member 61 is secured to the slide via a slide portion 57 which extends in a radial direction. The stop 65 is constituted by the inner bounding wall of an opening 69 formed in a slide member 71 which extends in a radial direction and which is secured to the slide 57. Relative to the member 61 the opening 69 is dimensioned so as to allow pivotal movements of the sub-frame 3 in directions indicated by the double arrow A.

At the location of the connecting member 51 the sub-frame carries a disc-pressure member 73 for pressing the information carrier 7 onto the turntable 5. To enable the information carrier 7 to be placed on or removed from the turntable the disc-pressure member can be moved away from the turntable 5 by pivoting the sub-frame 3.

In the embodiments to be described hereinafter parts corresponding to those in the first embodiment bear the same reference numerals.

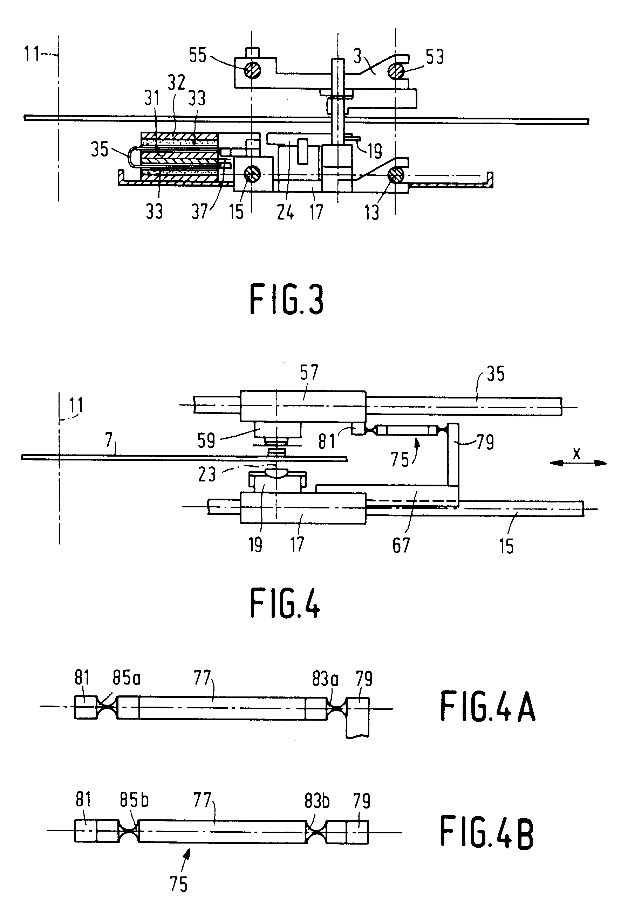

The part of the second embodiment shown in Fig. 4 comprises a slide 17 carrying an optical unit 19 and a slide 57 carrying a magnetic unit 59. The slides 17 and 57 each comprise separate rectilinear guide means, whose respective guide spindles 15 and 55 are shown. The construction of the optical unit 19 and the magnetic unit 59 may correspond to the construction of the relevant units of the device shown in Figs. 1, 2 and 3. The slide 17 can be driven by a stepping motor or otherwise. The slides 17 and 57 are coupled to each other by means of a hinge construction 75, which has one side connected to a slide member 67 of the slide 17 and its other side to the slide 57. The hinge construction 75 comprises a central elongate portion 77, two end portions 79 and 81, and two pairs of elastic hinges 83A, 83B and 85A, 85B, extending between the parts 77 and 79 and between the parts 77 and 81 respectively. The hinges 83A and 85A have a hinge axis which is oriented transversely of the optical axis of the optical unit 19 and transversely of the direction of movement X of the two slides. The hinges 83B and 85B each have a hinge axis parallel to said optical axis 23. The hinge construction 75 allows a pivotal movement of the slide 57 relative to the slide 17 and is sufficiently rigid in the X direction to guarantee an accurately defined coupling between the two slides 17 and 57.

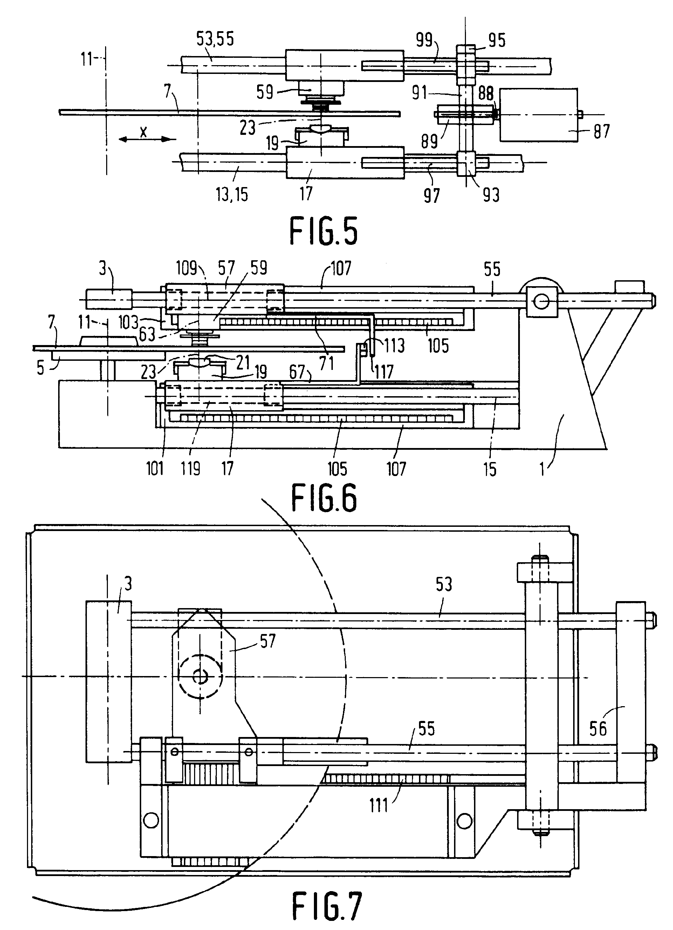

The part of the third embodiment of the device in accordance with the invention shown in Fig. 5, like the preceding embodiments, comprises a frame and a sub-frame which is secured to the relevant frame so as to be translatable or pivotable. The device comprises a slide 17 carrying an optical unit 19 and a slide 57 carrying a magnetic unit 59. Both slides are moved over rectilinear guide means, bearing the reference numerals 13, 15 and 53, 55, parallel to an information carrier 7 which extends between the two units 19 and 59. An electric motor 87 secured to the frame provides the drive for the two slides 17 and 57. The motor 87 comprises a motor shaft 88, which cooperates with a transmission mechanism 59, for example a worm wheel and gear wheel transmission which cooperates with a drive shaft 91. At each end the drive shaft 91, which extends parallel to the optical axis 23 of the optical unit 19, carries a pinion 93 and 95 respectively. The slide 17 is provided with a gear rack 97 which extends in the driving direction X and the slide 57 is provided with a gear rack 99 which extends parallel thereto. Since the gear rack 97 cooperates with the pinion 93 and the gear rack 99 cooperates with the pinion 95, the slides 17 and 57 can be moved concurrently and synchronously by one motor, so that the desired radial position of the optical unit 19 and the magnetic unit 59 relative to one another is guaranteed during operation.

The fourth embodiment of the device in accordance with the invention shown in Figs. 6 and 7 comprises a frame 1 comprising two parallel guide spindles, of which only one spindle, bearing the reference numeral 15, is shown, and a pivotable sub-frame 3 comprising two guide spindles 53 and 55, which engage against a stop element 56 of the frame 1 during operation. The guide spindles of the frame 1 serve for guiding and supporting a slide 17 and the guide spindles 53 and 55 serve for guiding and supporting a slide 57. The slide 17 carries an optical unit 19 comprising an objective 21 having an optical axis 23 and an electro-magnetic actuator for moving the objective along the optical axis 23. A magnetic unit 59 having a magnetic axis 63 is suspended from the slide 57. A turntable 5, which is supported in the frame 1, carries a magneto-optical information carrier 7 at least during operation. The slides 17 and 57 are driven in radial directions independently of one another. For this purpose each slide is coupled to a linear motor 101 and 103 respectively. Both motors 101 and 103 each comprise a stator, having a magnet 105 and a stator yoke 107, and an armature, having one or more coils 109. For the purpose of position detection one of the two motors, for example the linear motor 101 is provided with an incremental measurement ruler 111 and an optical sensor which cooperates therewith. In order to guarantee an optimum cooperation between the optical unit 19 and the magnetic unit 59 during recording on the magneto-optical information carrier 7 the device comprises a measurement and control system for positioning the optical unit and the magnetic unit relative to one another at least during operation. The measurement and control system comprises an optical distance meter (opto-coupler) 113 arranged slide member 67 of the slide 17 and a reflecting surface 117 arranged on a slide member 71 of the slide 57. The optical distance meter 113 is arranged opposite the reflecting surface 117 and is connected to an electronic control unit.

## Claims

1. A device for inscribing and/or reading a magneto-optical information carrier, comprising
- a frame (1) with a turntable (5) which is rotatable about an axis of rotation (11) for supporting the information carrier,
- a slide (17) comprising an optical unit (19), which comprises an objective for concentrating a radiation beam to form at least one radiation spot in a focusing plane,
- a rectilinear guide means (15) for the slide, arranged on the frame, and a slide drive unit, and
- a movable magnetic unit (59) which, viewed along said axis of rotation, is arranged opposite to and spaced from the optical unit for generating a magnetic field which extends into said focusing plane,
characterized in that the device further comprises
- a movable sub-frame (3) secured to the frame and supported to be movable relative to the frame between an operating position and another position,
- a further slide (57), to which the magnetic unit is secured,
- a further rectilinear guide means (55) for the further slide, arranged on the sub-frame, which further rectilinear guide means, at least in the operating position, extends parallel to the rectilinear guide means for the first-mentioned slide, and
- mechanical coupling means (61) for coupling the slides to one another, at least in the operating position of the sub-frame, which coupling means (61) allow movements of the sub-frame with regard to the frame between the operating position and the other position.

2. A device as claimed in Claim 1, characterized in that the sub-frame is secured to the frame so as to be pivotable about a pivotal axis (43).

3. A device as claimed in Claim 1 or 2, characterized in that the coupling means comprise a projecting member (61) arranged on one of the slides and a stop (65) arranged on the other slide to cooperate with said projecting member.

4. A device as claimed in Claim 1 or 2, characterized in that the coupling means comprise a hinge construction (75) secured to both slides.

5. A device as claimed in Claim 1 or 2, characterized in that the coupling means comprise a transmission mechanism cooperating with the slide-drive unit.

6. A device as claimed in any one of the preceding Claims, the device comprising a pressure member (73) for pressing the information carrier onto the turntable in the operating position, characterized in that the pressure member is secured to the sub-frame.

## Patentansprüche

1. Einrichtung zum Einschreiben und/oder Auslesen eines magnetooptischen Informationsträgers, mit
- einem Gestell (1) mit einem um eine Drehungsachse (11) drehbaren Plattenteller (5) zum Auflegen des Informationsträgers,
- einem Schlitten (17) mit einer optischen Einheit (19), die mit einem Objektiv zum Konzentrieren eines Strahlungsbündels zu mindestens einem Strahlungsflecken in einer Fokussierebene versehen ist,
- einer auf dem Gestell angeordneten ersten Geradeführung (15) für den Schlitten sowie einer Schlittenantriebseinheit, und
- einer, in der Richtung der genannten Drehungsachse gesehen, gegenüber und in einem Abstand von der optischen Einheit angeordneten verschiebbaren Magneteinheit (59) zum Erzeugen eines sich bis in die genannte Fokussierebene erstreckenden Magnetfeldes,
dadurch gekennzeichnet, daß die Einrichtung weiterhin die nachfolgenden Elemente aufweist:
- ein am Gestell befestigtes und gegenüber dem Gestell zwischen einer Betriebslage und einer anderen Lage bewegliches Hilfsgestell (3),
- einen weiteren Schlitten (57), an dem die magnetische Einheit befestigt ist,
- eine weitere Geradeführung (55) für den weiteren Schlitten, wobei diese weitere Geradeführung wenigstens im Betrieb sich parallel zu der Geradeführung für den erstgenannten Schlitten erstreckt,
- mechanische Kupplungsmittel (61) zum Kuppeln der Schlitten miteinander, wenigstens in der Betriebslage des Hilfsgestells, wobei diese Kupplungsmittel (61) Bewegungen des Hilfsgestells in bezug auf das Gestell zwischen der Betriebslage und der anderen Lage erlauben.

2. Einrichtung nach Anspruch 1, **dadurch gekennzeichnet**, daß das Hilfsgestell derart an dem gestell befestigt ist, daß es um eine Schwenkachse (43) schwenken kann.

3. Einrichtung nach Anspruch 1 oder 2, dadurch gekennzeichnet, daß die Kupplkungsmittel einen Vorpsrung (61) haben, der auf einem der Schlitten vorgesehen ist, sowie einen Anschlag (65) auf dem anderen Schlitten zum Zusammenarbeiten mit dem genannten Vorsprung.

4. Einrichtung nach Anspruch 1 oder 2, dadurch gekennzeichnet, daß die Kupplungsmittel eine Gelenkkonstruktion (75) aufweisen, die an beiden Schlitten befestigt ist.

5. Einrichtung nach Anspruch 1 oder 2, dadurch gekennzeichnet, daß die Kupplungsmittel ein Getriebe aufweisen, das mit der Schlittenantriebsvorrichtung zusammenarbeitet.

6. Einrichtung nach einem der vorstehenden Ansprüche, wobei diese Einrichtungein Andrückelement (73) aufweist zum Andrücken des Informationsträgers an dem Plattenteller in der Betriebslage, dadurch gekennzeichnet, daß dieses Andrückelement am Hilfsgestell befestigt ist.

## Revendications

1. Dispositif pour l'enregistrement et/ou la lecture d'un support d'information magnéto-optique comprenant
- un châssis (1) muni d'une plaque rotative (5) qui peut tourner autour d'un axe de rotation (11) pour supporter le support d'information
- un chariot (17) muni d'une unité optique (19), qui comprend un objectif pour la concentration d'un faisceau de rayonnement pour former au moins un spot de rayonnement dans un plan de focalisation,
- un moyen de guidage rectiligne (15) pour le chariot, disposé sur le châssis, et une unité d'entraînement de chariot et
- une unité magnétique mobile (59) qui, vue le long dudit axe de rotation, est disposée à l'opposé et de façon espacée de l'unité optique pour engendrer un champ magnétique qui s'étend dans ledit plan de focalisation,
caractérisé en ce que le dispositif comprend en outre
- un châssis partiel mobile (3) fixé au châssis et supporté de façon à être mobile par rapport au châssis entre une position de fonctionnement et une autre position,
- un autre chariot (57) auquel est fixée l'unité magnétique,
- un autre moyen de guidage (55) pour l'autre chariot, disposé sur le châssis partiel, lequel autre moyen de guidage rectiligne s'étend au moins dans la position de fonctionnement parallèlement au moyen de guidage rectiligne pour le premier chariot, et
- un moyen d'accouplement mécanique (61) pour l'accouplement des chariots l'un à l'autre, au moins dans la position de fonctionnement du châssis partiel, lequel moyen d'accouplement (61) permet des mouvements du châssis partiel par rapport au châssis entre la position de fonctionnement et l'autre position.

2. Dispositif selon la revendication 1, caractérisé en ce que le châssis partiel est fixé au châssis de façon à pouvoir pivoter autour d'un axe de pivotement (43).

3. Dispositif selon la revendication 1 ou 2, caractérisé en ce que les moyens d'accouplement sont munis d'un élément saillant (61) disposé sur l'un des chariots et d'un arrêt (65) disposé sur l'autre chariot pour coopérer avec ledit élément saillant.

4. Dispositif selon la revendication 1 ou 2, caractérisé en ce que les moyens d'accouplement sont munis d'une construction articulée (75) fixée aux deux chariots.

5. Dispositif selon la revendication 1 ou 2, caractérisé en ce que les moyens d'accouplement sont munis d'un mécanisme de transmission coopérant avec l'unité d'entraînement de chariot.

6. Dispositif selon l'une des revendications précédentes, comprenant un élément de pression (73) pour presser le support d'information sur la plaque rotative dans la position de fonctionnement, caractérisé en ce que l'élément de pression est fixé au châssis partiel.
